# EUROPEAN PATENT SPECIFICATION

(11) **EP 3 975 687 B1**
(45) Date of publication and mention of the grant of the patent: **10.06.2026**
(21) Application number: 20814018.6
(22) Date of filing: 19.05.2020
(51) Int. Cl.: A01D 34/00, A01D 34/86

(54) **AUTONOMOUS ROBOTIC LAWNMOWER COMPRISING SUSPENSION MEANS PROGRESSIVELY LIMITING PIVOTAL MOVEMENT OF A CUTTING UNIT**
AUTONOMER ROBOTISCHER RASENMÄHER MIT AUFHÄNGUNGSMITTELN ZUR PROGRESSIVEN BEGRENZUNG DER SCHWENKBEWEGUNG EINER SCHNEIDEINHEIT
TONDEUSE À GAZON ROBOTIQUE AUTONOME COMPRENANT DES MOYENS DE SUSPENSION LIMITANT PROGRESSIVEMENT LE PIVOTEMENT D'UNE UNITÉ DE COUPE

(30) Priority: 28.05.2019 SE 1950634
(43) Date of publication of application: 06.04.2022
(73) Proprietor: HUSQVARNA AB, 561 82 Huskvarna (SE)
(72) Inventor: SVENSSON, Mats, 56144 HUSKVAR`NA (SE); DANLING, Anders, 564 32 BANKERYD (SE)
(86) International application number: PCT/SE2020/050515
(87) International publication number: WO 2020/242363

(56) References cited:
- EP-A1- 3 238 522
- EP-A1- 3 238 522
- EP-B1- 3 927 141
- WO-A1-2018/013045
- US-A1- 2009 100 817
- US-A1- 2013 291 509
- US-A1- 2015 189 830
- US-A1- 2017 079 201
- US-A1- 2017 129 297
- US-B2- 10 259 498
- US-B2- 6 711 885

## Description

### TECHNICAL FIELD

The present disclosure relates to an autonomous robotic lawnmower comprising a driving unit with one or more drive wheels and a cutting unit comprising one or more support wheels configured to support the cutting unit by abutting against a ground surface during operation of the lawnmower.

### BACKGROUND

Autonomous robotic lawnmowers of different configurations are available on the market today which are capable of cutting grass in areas in an autonomous manner. Some robotic lawnmowers require a user to set up a border wire around a lawn that defines the area to be mowed. Such robotic lawnmowers use a sensor to locate the wire and thereby the boundary of the area to be trimmed. In addition to the wire, robotic lawnmowers may also comprise other types of positioning units and sensors, for example sensors for detecting an event, such as a collision with an object within the area.

A robotic lawnmower may comprise one or more batteries and one or more electric motors being powered by the one or more batteries. Some robotic lawnmowers comprise a photovoltaic module arranged to generate electricity from the sun's rays which may fully or partially provide an energy source for charging the one or more batteries. The robotic lawnmower may move in a systematic and/or random pattern to ensure that the area is completely covered. In some cases, the robotic lawnmower uses the wire to locate a recharging dock used to recharge the one or more batteries.

Generally, robotic lawnmowers operate unattended within the area in which they operate. Many areas comprise more or less slopes which may pose problems for the traction and navigability of the robotic lawnmower. Such problems may adversely affect the coverage of an area operated by a robotic lawnmower. Moreover, in general, an important aspect of robotic lawnmowers is the cutting result.

In addition, even though robotic lawnmowers are intended to operate unattended within an area, safety is a concern because people and animals may be present in the area during operation of the robotic lawnmower.

Furthermore, generally, on today's consumer market, it is an advantage if products, such as robotic lawnmowers, have conditions and/or characteristics suitable for being manufactured and assembled in a cost-efficient manner.

The document EP 3238522 A1 relates to a self-propelled work device comprising a motor-driven operating portion, movement means comprising at least one pair of drive wheels and connecting means configured for connecting together the operating portion and the movement means in such a way as to allow a relative movement between them.

The document US 20150189830 A1 relates to a robotic vehicle including a power module and a working module. The power module may include a drive motor for propelling the robotic vehicle responsive to control by a control circuitry. The working module may be configured to perform a function with respect to a defined area responsive to being propelled by the power module. The working module may be one of a plurality of interchangeable working modules that are attachable to the power module. At least one of the interchangeable working modules may have a different function than the working module.

The document US 10259498 B2 relates to a robotic vehicle comprising a first chassis platform comprising a first wheel assembly, a second chassis platform comprising a second wheel assembly, the first and second chassis platforms being spaced apart from each other. The robotic vehicle further comprises a linkage operably coupled to the first chassis platform and the second chassis platform, such that the linkage is fixed relative to the first chassis platform, and such that the second chassis platform is rotatable relative to the first chassis platform, wherein the second chassis platform comprises a turning axis.

The document US 6711885 B2 relates to a lawn mower including a chassis assembly having one or more drive wheels, a ground-following cutter deck assembly attached to the chassis, and rolling mechanism attached to the cutter deck, wherein the chassis and the cutter deck are arranged such that the rolling mechanism and the drive wheels support the chassis for movement over a surface.

### SUMMARY

It is an object of the present invention to overcome, or at least alleviate, at least some of the above-mentioned problems and drawbacks.

According to an aspect of the invention, the object is achieved by an autonomous robotic lawnmower set out in the dependent claim 1. The autonomous robotic lawnmower comprises a driving unit comprising one or more drive wheels and a cutting unit configured to cut grass during operation of the lawnmower. The cutting unit comprises one or more support wheels configured to support the cutting unit by abutting against a ground surface during operation of the lawnmower. The cutting unit is movably arranged relative to the driving unit, and wherein the lawnmower comprises a suspension assembly configured to progressively limit movement between the cutting unit and the driving unit during operation of the lawnmower.

Irregularities in an area operated by a robotic lawnmower, such as bumps, slopes, undulations, and the like, are likely to adversely affect the cutting result. The cutting result can be subdivided into visual cutting result and uniformity of cutting. The visual cutting result can be defined as the visual cutting result determined by a person viewing a mowed lawn. The uniformity of the cutting can be defined as uniformity of a length of the grass of a mowed lawn, i.e. if straws of the grass in a lawn are cut to a uniform length.

Since the cutting unit is movably arranged relative to the driving unit and since the robotic lawnmower comprises the suspension assembly, a robotic lawnmower is provided capable of cutting an area with improved cutting result. This because when the lawnmower is operating on an area comprising irregularities, the cutting unit may move relative to the driving unit so as to follow the terrain of the area operated. In this manner, the cutting unit will obtain a more advantageous position relative to the lawn during operation of the robotic lawnmower which improves the cutting result.

In addition, since the robotic lawnmower comprises the suspension assembly, the cutting unit may move relative to the driving unit in a more controlled manner so as to follow the terrain of the area operated in a smoother and more controlled manner, which provides conditions for a further improved cutting result.

Furthermore, since the cutting unit is movably arranged relative to the driving unit and since the robotic lawnmower comprises the suspension assembly, a robotic lawnmower is provided having conditions for an improved terrain operating capability. This because when the lawnmower is operating on an area comprising irregularities, the cutting unit may move relative to the driving unit so as to follow the terrain of the area operated in a smooth and controlled manner.

Moreover, since the cutting unit can follow the terrain of the area operated to obtain a more advantageous position relative to the lawn during operation of the robotic lawnmower, portions of the cutting unit are less likely to be exposed to the sides of the robotic lawnmower during operation of the lawnmower which normally would pose safety concerns in case people and/or animals are present in the area operated by robotic lawnmower. Accordingly, due to these features, a robotic lawnmower is provided capable of cutting an area in a safer manner.

The cutting unit is pivotally arranged to the driving unit. Thereby, during operation of the lawnmower, the cutting unit may pivot relative to the driving unit so as to follow the terrain of the area operated in a smooth and controlled manner. In this way, the cutting unit may obtain a more advantageous angle relative to the lawn during operation of the robotic lawnmower which can improve the cutting result as well as the safety during operation of the robotic lawnmower.

The cutting unit is pivotally arranged to the driving unit to pivot around a pivot axis. Thereby, during operation of the lawnmower, the cutting unit may pivot relative to the driving unit around the pivot axis so as to follow the terrain of the area operated in a smooth and controlled manner.

The pivot axis is substantially parallel to a forward direction of travel of the lawnmower. Thereby, during operation of the lawnmower, the cutting unit may pivot relative to the driving unit around the pivot axis so as to follow the terrain of the area operated in a smooth and controlled manner. In this way, the cutting unit may obtain a more advantageous angle relative to the lawn during operation of the robotic lawnmower which can improve the cutting result. Furthermore, since the pivot axis is substantially parallel to a forward direction of travel of the lawnmower, it can be ensured that the robotic lawnmower is rigid in the longitudinal direction thereof, i.e. that the cutting unit is not pivoted around an axis angled relative to the forward direction of travel of the lawnmower, such as an axis perpendicular to the forward direction of travel of the lawnmower. As a result, the cutting result can be improved and the risk that the cutting unit is bumping into objects protruding from an area operated is reduced.

The suspension assembly comprises one or more suspension units arranged at a distance from the pivot axis. Thereby, a simple and reliable solution is provided for progressively limit movement between the cutting unit and the driving unit during operation of the lawnmower in a smooth and controlled manner. Moreover, a robotic lawnmower is provided having conditions and characteristics suitable for being manufactured and assembled in a cost-efficient manner.

The suspension assembly is configured to limit pivoting movement between the cutting unit and the driving unit. Thereby, when the lawnmower is operating on an area comprising irregularities, the cutting unit may pivot relative to the driving unit so as to follow the terrain of the area operated in a smoother and more controlled manner, which provides conditions for a further improved cutting result.

Accordingly, an autonomous robotic lawnmower is provided overcoming, or at least alleviating, at least some of the above-mentioned problems and drawbacks. As a result, the above-mentioned object is achieved.

Optionally, the lawnmower comprises a shaft, and wherein the cutting unit is pivotally arranged to the driving unit via the shaft. Thereby, a simple and reliable solution is provided for allowing the cutting unit to pivot relative to the driving unit so as to follow the terrain of the area operated in a smooth and controlled manner. As a further result, a robotic lawnmower is provided having conditions and characteristics suitable for being manufactured and assembled in a cost-efficient manner.

Optionally, the suspension assembly comprises a first suspension unit arranged on a first side of a vertical plane extending along the pivot axis and a second suspension unit arranged on a second side of the vertical plane extending along the pivot axis. Thereby, a simple and reliable solution is provided for progressively limit movement between the cutting unit and the driving unit during operation of the lawnmower in a further smoother and more controlled manner. Moreover, a robotic lawnmower is provided having conditions and characteristics suitable for being manufactured and assembled in a cost-efficient manner.

Optionally, the suspension assembly is configured to limit pivoting movement between the cutting unit and the driving unit to a maximum pivoting movement within the range of 7 degrees to 15 degrees, or within the range of 8 degrees to 12 degrees. Thereby, a robotic lawnmower is provided in which the cutting unit may move relative to the driving unit so as to follow the terrain of the area operated in a smooth and controlled manner, while it is ensured that the cutting unit does not become wobbly or unstable. As a further result thereof, a robotic lawnmower is provided having conditions for a further improved terrain operating capability.

Optionally, the suspension assembly comprises one or more suspension units each comprising a spring element. Thereby, a simple and reliable solution is provided for progressively limit movement between the cutting unit and the driving unit during operation of the lawnmower in a smooth and controlled manner. Moreover, a robotic lawnmower is provided having conditions and characteristics suitable for being manufactured and assembled in a cost-efficient manner.

Optionally, the driving unit comprises two or more drive wheels and the cutting unit comprises two or more support wheels. When a previously available robotic lawnmower having four or more wheels is operating an area having irregularities, at least one of the wheel will in many cases be lifted from the ground surface during operation of the lawnmower. If so, during movement of the robotic lawnmower, the lawnmower will probably tip at a certain position in which the lifted wheel engages the ground surface and another wheel is lifted from the ground surface. As a result thereof, the angle between the cutting unit of the robotic lawnmower and the ground surface is suddenly changed, which leads to an uneven cutting result. That is, upon such a tilting, the cutting unit will cut straws of the grass of the lawn to a non-uniform length.

Moreover, upon such a tilting of the robotic lawnmower, there is an increased risk of the cutting unit bumping into objects protruding from an area operated. Furthermore, upon such a tilting of the robotic lawnmower, portions of the cutting unit will be exposed to the sides of the robotic lawnmower during operation of the lawnmower which may pose safety concerns in case people and/or animals are present in the area operated by robotic lawnmower.

Accordingly, since the cutting unit according to these embodiments is movably arranged relative to the driving unit and since the robotic lawnmower comprises the suspension assembly, a robotic lawnmower is provided in which the two or more support wheels and the two or more drive wheels can follow the terrain of the ground surface in an improved manner with a higher probability of ground engaging contact of all wheels of the robotic lawnmower. As a result thereof, the cutting unit may move relative to the driving unit so as to follow the terrain of the area operated to obtain a more advantageous position relative to the lawn during operation of the robotic lawnmower, which provides conditions for an improved the cutting result, a reduced risk of the cutting unit bumping into objects protruding from an area operated, as well as an improved safety during operation of the robotic lawnmower.

Optionally, the suspension assembly is configured to bias the cutting unit towards a neutral position relative to the driving unit. Thereby, the cutting unit may move relative to the driving unit so as to follow the terrain of the area operated in a smooth and controlled manner while the suspension assembly biases the cutting unit towards the neutral position. As a result, conditions are provided for an improved the cutting result, improved safety during operation of the robotic lawnmower, as well as an improved terrain operating capability of the robotic lawnmower.

Optionally, the neutral position constitutes a position of the cutting unit relative to the driving unit in which each ground engaging portion of said drive wheels and said support wheels extend along a flat plane. Accordingly, due to these features, the suspension assembly will apply no biasing force to the cutting unit when the robotic lawnmower is positioned on a flat ground surface and will apply a biasing force to the cutting unit towards the neutral position when the cutting unit is moved therefrom. As a result, conditions are provided for an improved the cutting result, improved safety during operation of the robotic lawnmower, as well as an improved terrain operating capability of the robotic lawnmower.

Optionally, the suspension assembly is configured to bias the cutting unit towards the neutral position with a magnitude that increases with increasing offset of the cutting unit from the neutral position. Accordingly, due to these features, the suspension assembly will apply a greater biasing force to the cutting unit towards the neutral position when the cutting unit is moved or pivoted a greater distance from the neutral position than when the cutting unit is moved or pivoted a shorter distance from the neutral position. As a result, conditions are provided for an improved the cutting result, improved safety during operation of the robotic lawnmower, as well as an improved terrain operating capability of the robotic lawnmower.

Optionally, the suspension assembly is configured to progressively limit movement between the cutting unit and the driving unit with a limiting force that increases with increased rate of movement between the cutting unit and the driving unit. Thereby, conditions are provided for a further smoother and more controlled movement between the cutting unit and the driving unit. As a further result, conditions are provided for an improved the cutting result, as well as an improved terrain operating capability of the robotic lawnmower.

Optionally, the lawnmower comprises a driving unit chassis and a cutting unit chassis, and wherein the suspension assembly is configured to progressively limit movement between the cutting unit chassis and the driving unit chassis. Thereby, a simple and reliable solution is provided for improving the cutting result, improving the safety during operation of the robotic lawnmower, as well as an improving the terrain operating capability of the robotic lawnmower.

Optionally, the driving unit comprises one or more electrical motors configured to rotate said one or more drive wheels to provide motive power to the lawnmower. Thereby, a simple, reliable, and environmentally friendly propulsion of the robotic lawnmower is provided.

Optionally, the lawnmower comprises a control unit configured to propel the lawnmower in an autonomous manner. Thereby, a robotic lawnmower is provided capable of navigating and cutting grass in an area without the intervention of a user.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 illustrates an autonomous robotic lawnmower, according to some embodiments,
Fig. 2 illustrates a lawnmower chassis of the autonomous robotic lawnmower illustrated in Fig. 1,
Fig. 3 illustrates a top view of the lawnmower chassis illustrated in Fig. 2, and
Fig. 4 illustrates a cross section of the lawnmower chassis illustrated in Fig. 3.

### DETAILED DESCRIPTION

Aspects of the present invention will now be described more fully. Like numbers refer to like elements throughout. Well-known functions or constructions will not necessarily be described in detail for brevity and/or clarity.

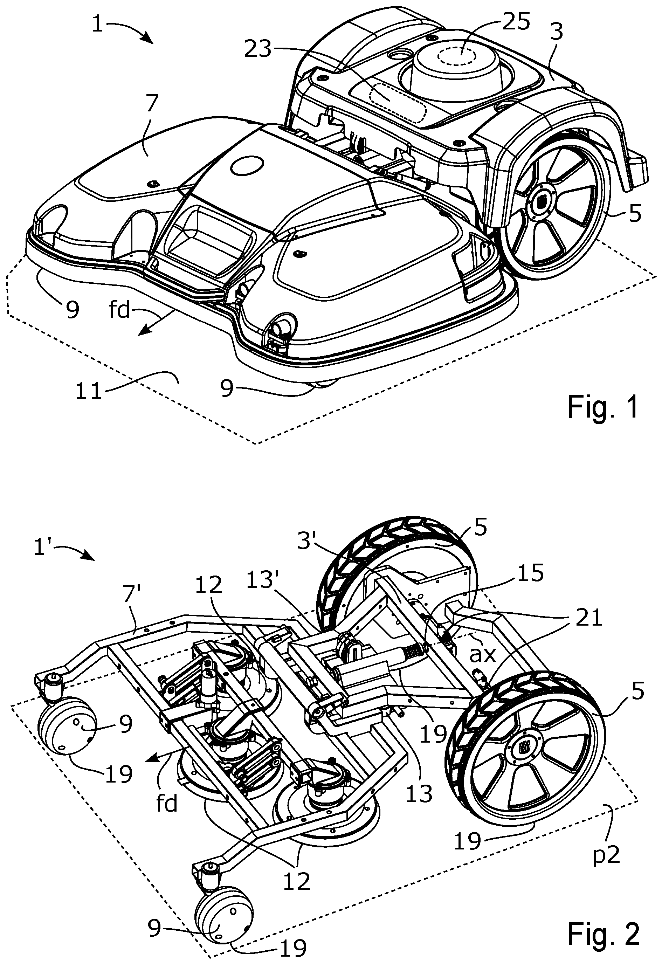

**Fig. 1** illustrates an autonomous robotic lawnmower 1, according to some embodiments. As is further explained herein, the autonomous robotic lawnmower 1 is a self-propelled autonomous robotic lawnmower 1 capable of navigating and cutting grass in an area without the intervention of a user. For the reason of brevity and clarity, the autonomous robotic lawnmower 1 is in some places herein referred to as the robotic lawnmower 1 or simply the lawnmower 1. The robotic lawnmower 1 comprises a driving unit 3 comprising drive wheels 5. According to the illustrated embodiments, the robotic lawnmower 1 comprises two drive wheels 5. According to further embodiments, the robotic lawnmower 1 may comprise another number of drive wheels 5, such as one, three, or the like.

Moreover, the robotic lawnmower 1 comprises a cutting unit 7 configured to cut grass during operation of the robotic lawnmower 1. According to the illustrated embodiments, the cutting unit 7 comprises two support wheels 9 configured to support the cutting unit 7 by abutting against a ground surface 11 during operation of the robotic lawnmower 1. According to further embodiments, the robotic lawnmower 1 may comprise another number of support wheels 9, such as one, three, four, or the like.

The robotic lawnmower 1 comprises a control unit 23. The control unit 23 is configured to propel and navigate the robotic lawnmower 1 in an autonomous manner without the intervention of a user by controlling electrical motors configured to rotate the driving wheels, using input from a sensor 25. The control unit 23 may be configured to control propulsion of the robotic lawnmower 1, and steer the robotic lawnmower 1, so as to navigate the robotic lawnmower 1 in an area to be operated. The sensor 25 may comprise one or more sensors arranged to sense a magnetic field of a wire, and/or one or more positioning units, and/or one or more sensors arranged to detect an impending or ongoing collision event with an object. In addition, the robotic lawnmower 1 may comprise a communication unit connected to the control unit 23. The communication unit may be configured to communicate with a remote communication unit to receive instructions therefrom and/or to send information thereto. The communication may be performed wirelessly over a wireless connection such as the internet, or a wireless local area network (WLAN), or a wireless connection for exchanging data over short distances using short-wavelength, i.e. ultra-high frequency (UHF) radio waves in the industrial, scientific, and medical (ISM) band from 2.4 to 2.485 GHz.

The control unit 23 may be configured to control propulsion of the robotic lawnmower 1, and steer the robotic lawnmower 1, so as to navigate the robotic lawnmower 1 in a systematic and/or random pattern to ensure that an area is completely covered, using input from one or more of the above described sensors and/or units. Furthermore, the robotic lawnmower 1 may comprise one or more batteries arranged to supply electricity to components of the robotic lawnmower 1. As an example, the one or more batteries may be arranged to supply electricity to electrical motors of the robotic lawnmower 1 by an amount controlled by the control unit 23.

According to the illustrated embodiments, the control unit 23 is configured to steer the robotic lawnmower 1 by controlling drive wheels 5 on opposite sides of the driving unit 3 to rotate at different speeds. In Fig. 1, a forward direction fd of travel of the robotic lawnmower 1 is indicated. According to the illustrated embodiments, the forward direction fd of travel is a direction obtained when the drive wheels 5 of the driving unit are rotating at the same rotational speed in a forward rotational direction and the robotic lawnmower 1 is propelled on a flat horizontal surface with no wheel slip. According to the illustrated embodiments, the cutting unit 7 is arranged in front of the driving unit 3 seen in the forward direction fd. Moreover, according to the illustrated embodiments, the driving unit 3 is arranged behind the cutting unit 7 seen in the forward direction fd and the drive wheels 5 can, according to the illustrated embodiments, be referred to as rear wheels.

According to the illustrated embodiments, the robotic lawnmower 1 is configured to be used to cut grass in areas used for aesthetic and recreational purposes, such as gardens, parks, city parks, sports fields, lawns around houses, apartments, commercial buildings, offices, and the like. The sports fields may include soccer fields, golf courses, and the like. According to some embodiments of the present disclosure, the weight of the robotic lawnmower is less than 100 kg, or less than 75 kg. Moreover, according to some embodiments of the present disclosure, the length of the robotic lawnmower 1, measured in the forward direction fd, is less than 1.5 metres, and the width of the robotic lawnmower 1, measured in a direction perpendicular to the forward direction fd, is less than 1.5 metres.

**Fig. 2** illustrates a lawnmower chassis 1' of the robotic lawnmower 1 illustrated in Fig. 1. Below, simultaneous reference is made to Fig. 1 and Fig. 2. As is evident from Fig. 2, the robotic lawnmower chassis 1' of the robotic lawnmower 1 illustrated in Fig. 1 comprises a driving unit chassis 3' and a cutting unit chassis 7'. The driving unit chassis 3' form part of the driving unit 3 and is arranged to support components of the driving unit 3. The cutting unit chassis 7' form part of the cutting unit 7 and is arranged to support components of the cutting unit 7.

Moreover, in Fig. 2, the support wheels 9 of the cutting unit 7, as well as the drive wheels 5 of the driving unit 3, are fully visible. Moreover, as is evident from Fig. 2, according to the illustrated embodiments, the robotic lawnmower 1 comprises one electrical motor 21 per drive wheel 5, wherein each electrical motor 21 is configured to rotate one drive wheel 5 to steer and propel, i.e. provide motive power to, the robotic lawnmower 1. According to further embodiments, the robotic lawnmower 1 may comprise another number of electrical motors 21, such as one electrical motor arranged to rotate more than one drive wheel to provide motive power to the robotic lawnmower 1.

Moreover, as can be seen in Fig. 2, the cutting unit 7 comprises a number of cutting members 12 arranged to cut grass during operation of the robotic lawnmower 1. According to the illustrated embodiments, the cutting unit 7 comprises three cutting members 12 in the form of cutting discs. According to further embodiments, the cutting unit 7 may comprise another number of cutting members 12, and another type of cutting members 12, such as one or more cutting arms.

According to the embodiments explained herein, the cutting unit 7 is movably arranged relative to the driving unit 3. The cutting unit 7 is pivotally arranged to the driving unit 3 to pivot around a pivot axis ax. As can be seen in Fig. 1, the robotic lawnmower 1 comprises a shaft 15, and wherein the cutting unit 7 is pivotally arranged relative to the driving unit 3 via the shaft 15. The direction of elongation of the shaft 15 extends in a direction substantially coinciding with the forward direction fd of travel of the robotic lawnmower 1. Thus, due to these features, the cutting unit 7 is pivotally arranged to the driving unit 3 around a pivot axis ax being substantially parallel to a forward direction fd of travel of the robotic lawnmower 1, as well as being substantially parallel to a horizontal flat plane p2 onto which the robotic lawnmower 1 is positioned.

Moreover, the robotic lawnmower 1 comprises a suspension assembly 13, 13'. The suspension assembly 13, 13' is configured to progressively limit movement between the cutting unit 7 and the driving unit 3 during operation of the robotic lawnmower 1. As is evident from Fig. 2, according to the illustrated embodiments, this is achieved by the suspension assembly 13, 13' being configured to progressively limit movement between the cutting unit chassis 7' and the driving unit chassis 3'. Due to these features, when the robotic lawnmower 1 is travelling/moving over a ground surface 11 having irregularities, the suspension assembly 13, 13' will to progressively limit movement between the cutting unit 7 and the driving unit 3. As a result, the cutting unit 7 may move relative to the driving unit 3 in a more controlled manner so as to follow the terrain of the ground surface 11 in a smoother and more controlled manner, which provides conditions for a further improved cutting result. As understood from the herein described, the feature that the suspension assembly 13, 13' is configured to progressively limit movement between the cutting unit 7 and the driving unit 3 during operation of the robotic lawnmower 1 means that the suspension assembly 13, 13' is configured to progressively limit movement between the cutting unit 7 and the driving unit 3 during travel/movement of the robotic lawnmower 1 over a ground surface 11. The cutting unit 7 may be active or inactive during such travel/movement of the robotic lawnmower 1.

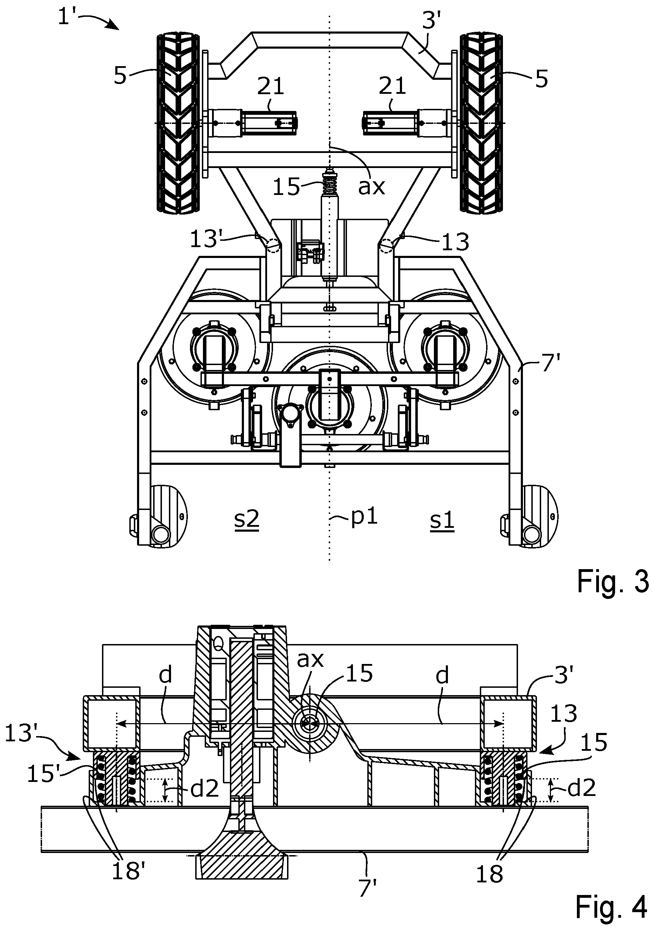

**Fig. 3** illustrates a top view of the lawnmower chassis 1' illustrated in Fig. 2. As best seen in Fig. 3, the suspension assembly 13, 13' comprises a first suspension unit 13 arranged on a first side s1 of a vertical plane p1 extending along the pivot axis ax and a second suspension unit 13' arranged on a second side s2 of the vertical plane p1 extending along the pivot axis ax. The vertical plane p1 is a plane perpendicular to a horizontal plane onto which the robotic lawnmower 1 is positioned. Such a horizontal plane p2 is indicated in Fig. 2. Moreover, in Fig. 3, the electrical motors 21 of the respective drive wheel 5 are fully visible.

**Fig. 4** illustrates a cross section of the lawnmower chassis 1' illustrated in Fig. 3. Below, simultaneous reference is made to Fig. 1 - Fig. 4. The cross section of Fig. 4 is made in a vertical plane perpendicular to the pivot axis ax at a portion of the lawnmower chassis 1' comprising the suspension assembly 13, 13'. As can be seen in Fig. 4, each suspension unit 13, 13' is arranged at a distance d from the pivot axis ax. Moreover, each suspension unit 13, 13' comprises a spring element 15, 15'.

According to the illustrated embodiments, the suspension assembly 13, 13' is configured to bias the cutting unit 7 towards a neutral position relative to the driving unit 3. In Fig. 1 - Fig. 4, the cutting unit 7 is illustrated in the neutral position. As indicated in Fig. 2, the neutral position constitutes a position of the cutting unit 7 relative to the driving unit 3 in which each ground engaging portion 19 of said drive wheels 5 and said support wheels 9 extend along a flat plane p2.

As understood from the herein described, the suspension assembly 13, 13' is configured to limit pivoting movement between the cutting unit 7 and the driving unit 3. If the cutting unit 7 is pivoted counterclockwise around the pivot axis ax in Fig. 4, from the neutral position to an offset position, a first spring element 15 of the first suspension unit 13 will be compressed and a second spring element 15' of the second suspension unit 13' will be expanded. Similarly, if the cutting unit 7 is pivoted clockwise around the pivot axis ax in Fig. 4, from the neutral position to an offset position, a first spring element 15 of the first suspension unit 13 will be expanded and a second spring element 15' of the second suspension unit 13' will be compressed. The distance d between each suspension unit 13, 13' and the pivot axis ax and the biasing force of each suspension unit 13, 13' may be adapted to provide a certain returning torque of the cutting unit 7 towards the neutral position.

Moreover, as understood from the above described, according to the illustrated embodiments, the suspension assembly 13, 13' is configured to bias the cutting unit 7 towards the neutral position with a magnitude that increases with increasing offset of the cutting unit 7 from the neutral position. The first and second spring elements 15, 15' may each provide a small biasing force, i.e. a small pre-tension, when the cutting unit 7 is in the neutral position.

According to some embodiments of the present disclosure, the suspension assembly 13, 13' may be configured to progressively limit movement between the cutting unit 7 and the driving unit 3 with a limiting force that increases with increased rate of movement between the cutting unit 7 and the driving unit 3. According to such embodiments, the robotic lawnmower 1 may comprise one or more dampers, such as one or more mechanical or hydraulic shock absorbers, each being configured to limit movement between the cutting unit 7 and the driving unit 3 with a limiting force that increases with increased rate of movement between the cutting unit 7 and the driving unit 3. Such a damper or dampers are not illustrated in the figures for the reason of brevity and clarity. Alternatively, the suspension assembly 13, 13' and the robotic lawnmower 1 may be free from such a damper or such dampers.

According to the illustrated embodiments, the suspension assembly 13, 13' is configured to limit pivoting movement between the cutting unit 7 and the driving unit 3 to a maximum pivoting movement of approximately 10 degrees. According to further embodiments, the suspension assembly 13, 13' may be configured to limit pivoting movement between the cutting unit 7 and the driving unit 3 to a maximum pivoting movement within the range of 7 degrees to 15 degrees, or within the range of 8 degrees to 12 degrees.

According to the illustrated embodiments, the first suspension unit 13 comprises a pair of stop surfaces 18 arranged to abut against each other when the first spring element 15 has been compressed a compression distance d2, to hinder further compression of the first spring element 15. According to the illustrated embodiments, compression distance d2 and distance d between the first suspension unit 13 and the pivot axis ax are arranged such that the pair of stop surfaces 18 abut against each other when the cutting unit 7 is pivoted approximately 5 degrees counterclockwise around the pivot axis ax from the neutral position illustrated in Fig. 4 to a first stop position. Likewise, the second suspension unit 13' comprises a pair of stop surfaces 18' arranged to abut against each other when the second spring element 15' has been compressed a compression distance d2, to hinder further compression of the second spring element 15'. According to the illustrated embodiments, compression distance d2 and distance d between the second suspension unit 13' and the pivot axis ax are arranged such that the pair of stop surfaces 18' abut against each other when the cutting unit 7 is pivoted approximately 5 degrees clockwise around the pivot axis ax from the neutral position illustrated in Fig. 4 to a second stop position. In this manner, the stop surfaces 18, 18' of the suspension assembly 13, 13' will limit pivoting movement between the cutting unit 7 and the driving unit 3 to a maximum pivoting movement of approximately 10 degrees. As understood from the above, the wording maximum pivoting movement, as used herein, refers to a pivoting movement of the cutting unit 7 from the first stop position, past the neutral position, to the second stop position.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the present invention, as defined by the appended claims.

As used herein, the term "comprising" or "comprises" is open-ended, and includes one or more stated features, elements, steps, components, or functions but does not preclude the presence or addition of one or more other features, elements, steps, components, functions or groups thereof.

## Claims

1. An autonomous robotic lawnmower (1) comprising:
- a driving unit (3) comprising one or more drive wheels (5), and
- a cutting unit (7) configured to cut grass during operation of the lawnmower (1),
wherein the cutting unit (7) comprises one or more support wheels (9) configured to support the cutting unit (7) by abutting against a ground surface (11) during operation of the lawnmower (1), and
wherein the cutting unit (7) is pivotally arranged to the driving unit (3) to pivot around a pivot axis (ax), and wherein the pivot axis (ax) is substantially parallel to a forward direction (fd) of travel of the lawnmower (1),
**characterized in that** the lawnmower (1) comprises a suspension assembly (13, 13') comprising one or more suspension units (13, 13') arranged at a distance (d) from the pivot axis (ax), each comprising a spring element (15, 15'), wherein the suspension assembly (13, 13') is configured to progressively limit pivoting movement between the cutting unit (7) and the driving unit (3) during operation of the lawnmower (1).

2. The lawnmower (1) according to claim 1, wherein the lawnmower (1) comprises a shaft (15), and wherein the cutting unit (7) is pivotally arranged to the driving unit (3) via the shaft (15).

3. The lawnmower (1) according to claim 1 or 2, wherein the suspension assembly (13, 13') comprises a first suspension unit (13) arranged on a first side (s1) of a vertical plane (p1) extending along the pivot axis (ax) and a second suspension unit (13') arranged on a second side (s2) of the vertical plane (p1) extending along the pivot axis (ax).

4. The lawnmower (1) according to any one of the preceding claims, wherein the suspension assembly (13, 13') is configured to limit pivoting movement between the cutting unit (7) and the driving unit (3) to a maximum pivoting movement within the range of 7 degrees to 15 degrees, or within the range of 8 degrees to 12 degrees.

5. The lawnmower (1) according to any one of the preceding claims, wherein the driving unit (3) comprises two or more drive wheels (5) and the cutting unit (7) comprises two or more support wheels (9).

6. The lawnmower (1) according to any one of the preceding claims, wherein the suspension assembly (13, 13') is configured to bias the cutting unit (7) towards a neutral position relative to the driving unit (3).

7. The lawnmower (1) according to claim 5 and 6, wherein the neutral position constitutes a position of the cutting unit (7) relative to the driving unit (3) in which each ground engaging portion (19) of said drive wheels (5) and said support wheels (9) extend along a flat plane (p2).

8. The lawnmower (1) according to claim 6 or 7, wherein the suspension assembly (13, 13') is configured to bias the cutting unit (7) towards the neutral position with a magnitude that increases with increasing offset of the cutting unit (7) from the neutral position.

9. The lawnmower (1) according to any one of the preceding claims, wherein the lawnmower (1) comprises a driving unit chassis (3') and a cutting unit chassis (7'), and wherein the suspension assembly (13, 13') is configured to progressively limit movement between the cutting unit chassis (7') and the driving unit chassis (3').

10. The lawnmower (1) according to any one of the preceding claims, wherein the driving unit (3) comprises one or more electrical motors (21) configured to rotate said one or more drive wheels (5) to provide motive power to the lawnmower (1).

11. The lawnmower (1) according to any one of the preceding claims, wherein the lawnmower (1) comprises a control unit (23) configured to propel the lawnmower (1) in an autonomous manner.

## Patentansprüche

1. Autonomer Roboterrasenmäher (1), umfassend:
- eine Antriebseinheit (3), umfassend ein oder mehrere Antriebsräder (5) und
- eine Schneideinheit (7), die konfiguriert ist, um Gras während eines Betriebs des Rasenmähers (1) zu schneiden,
wobei die Schneideinheit (7) ein oder mehrere Stützräder (9) umfasst, die konfiguriert sind, um die Schneideinheit (7) zu stützen durch ein Angrenzen an eine Bodenoberfläche (11) während des Betriebs des Rasenmähers (1) und
wobei die Schneideinheit (7) an der Antriebseinheit (3) schwenkbar angeordnet ist, um um eine Schwenkachse (ax) herum zu schwenken, und wobei die Schwenkachse (ax) im Wesentlichen parallel zu einer Vorwärtsrichtung (fd) der Fahrt des Rasenmähers (1) ist,
**dadurch gekennzeichnet, dass** der Rasenmäher (1) eine Aufhängungsanordnung (13, 13') umfasst, umfassend eine oder mehrere Aufhängungseinheiten (13, 13'), die in einem Abstand (d) von der Schwenkachse (ax) angeordnet sind, jede umfassend ein Federelement (15, 15'), wobei die Aufhängungsanordnung (13, 13') konfiguriert ist, um eine Schwenkbewegung zwischen der Schneideinheit (7) und der Antriebseinheit (3) während des Betriebs des Rasenmähers (1) progressiv zu begrenzen.

2. Rasenmäher (1) nach Anspruch 1, wobei der Rasenmäher (1) eine Welle (15) umfasst und wobei die Schneideinheit (7) an der Antriebseinheit (3) über die Welle (15) schwenkbar angeordnet ist.

3. Rasenmäher (1) nach Anspruch 1 oder 2, wobei die Aufhängungsanordnung (13, 13') eine erste Aufhängungseinheit (13), die auf einer ersten Seite (s1) einer vertikalen Ebene (p1) angeordnet ist, die sich entlang der Schwenkachse (ax) erstreckt, und eine zweite Aufhängungseinheit (13'), die auf einer zweiten Seite (s2) der vertikalen Ebene (p1) angeordnet ist, die sich entlang der Schwenkachse (ax) erstreckt, umfasst.

4. Rasenmäher (1) nach einem der vorstehenden Ansprüche, wobei die Aufhängungsanordnung (13, 13') konfiguriert ist, um die Schwenkbewegung zwischen der Schneideinheit (7) und der Antriebseinheit (3) auf eine maximale Schwenkbewegung innerhalb des Bereichs von 7 Grad bis 15 Grad oder innerhalb des Bereichs von 8 Grad bis 12 Grad zu begrenzen.

5. Rasenmäher (1) nach einem der vorstehenden Ansprüche, wobei die Antriebseinheit (3) zwei oder mehrere Antriebsräder (5) umfasst und die Schneideinheit (7) zwei oder mehrere Stützräder (9) umfasst.

6. Rasenmäher (1) nach einem der vorstehenden Ansprüche, wobei die Aufhängungsanordnung (13, 13') konfiguriert ist, um die Schneideinheit (7) zu einer Nullstellung relativ zu der Antriebseinheit (3) hin vorzuspannen.

7. Rasenmäher (1) nach Anspruch 5 und 6, wobei die Nullstellung eine Stellung der Schneideinheit (7) relativ zu der Antriebseinheit (3) darstellt, in der sich jeder Bodeneingriffsabschnitt (19) der Antriebsräder (5) und der Stützräder (9) entlang einer flachen Ebene (p2) erstreckt.

8. Rasenmäher (1) nach Anspruch 6 oder 7, wobei die Aufhängungsanordnung (13, 13') konfiguriert ist, um die Schneideinheit (7) zu der Nullstellung hin mit einer Größe vorzuspannen, die mit einem zunehmenden Versatz der Schneideinheit (7) von der Nullstellung zunimmt.

9. Rasenmäher (1) nach einem der vorstehenden Ansprüche, wobei der Rasenmäher (1) ein Antriebseinheitsfahrgestell (3') und ein Schneideinheitsfahrgestell (7') umfasst und wobei die Aufhängungsanordnung (13, 13') konfiguriert ist, um die Bewegung zwischen dem Schneideinheitsfahrgestell (7') und dem Antriebseinheitsfahrgestell (3') progressiv zu begrenzen.

10. Rasenmäher (1) nach einem der vorstehenden Ansprüche, wobei die Antriebseinheit (3) einen oder mehrere Elektromotoren (21) umfasst, die konfiguriert sind, um das eine oder die mehreren Antriebsräder (5) zu drehen, um dem Rasenmäher (1) eine Treibkraft bereitzustellen.

11. Rasenmäher (1) nach einem der vorstehenden Ansprüche, wobei der Rasenmäher (1) eine Steuereinheit (23) umfasst, die konfiguriert ist, um den Rasenmäher (1) auf eine autonome Weise voranzubringen.

## Revendications

1. Tondeuse à gazon (1) robotisée autonome comprenant :
- une unité d'entraînement (3) comprenant une ou plusieurs roues motrices (5), et
- une unité de coupe (7) conçue pour couper l'herbe pendant le fonctionnement de la tondeuse à gazon (1),
dans laquelle l'unité de coupe (7) comprend une ou plusieurs roues de support (9) conçues pour supporter l'unité de coupe (7) en venant en butée contre une surface de sol (11) pendant le fonctionnement de la tondeuse à gazon (1), et
dans laquelle l'unité de coupe (7) est agencée de manière pivotante sur l'unité d'entraînement (3) pour pivoter autour d'un axe de pivotement (ax), et dans laquelle l'axe de pivotement (ax) est sensiblement parallèle à une direction de déplacement vers l'avant (fd) de la tondeuse à gazon (1),
**caractérisée en ce que** la tondeuse à gazon (1) comprend un ensemble suspension (13, 13') comprenant une ou plusieurs unités de suspension (13, 13') agencées à une distance (d) de l'axe de pivotement (ax), chacune comprenant un élément ressort (15, 15'), dans laquelle l'ensemble suspension (13, 13') est conçu pour limiter progressivement le mouvement de pivotement entre l'unité de coupe (7) et l'unité d'entraînement (3) pendant le fonctionnement de la tondeuse à gazon (1).

2. Tondeuse à gazon (1) selon la revendication 1, dans laquelle la tondeuse à gazon (1) comprend un arbre (15), et dans laquelle l'unité de coupe (7) est agencée de manière pivotante vers l'unité d'entraînement (3) par l'intermédiaire de l'arbre (15).

3. Tondeuse à gazon (1) selon la revendication 1 ou 2, dans laquelle l'ensemble suspension (13, 13') comprend une première unité de suspension (13) agencée sur un premier côté (s1) d'un plan vertical (p1) s'étendant le long de l'axe de pivotement (ax) et une seconde unité de suspension (13') agencée sur un second côté (s2) du plan vertical (p1) s'étendant le long de l'axe de pivotement (ax).

4. Tondeuse à gazon (1) selon l'une quelconque des revendications précédentes, dans laquelle l'ensemble suspension (13, 13') est conçu pour limiter le mouvement de pivotement entre l'unité de coupe (7) et l'unité d'entraînement (3) à un mouvement de pivotement maximal dans la plage de 7 degrés à 15 degrés, ou dans la plage de 8 degrés à 12 degrés.

5. Tondeuse à gazon (1) selon l'une quelconque des revendications précédentes, dans laquelle l'unité d'entraînement (3) comprend au moins deux roues motrices (5) et l'unité de coupe (7) comprend au moins deux roues de support (9).

6. Tondeuse à gazon (1) selon l'une quelconque des revendications précédentes, dans laquelle l'ensemble suspension (13, 13') est conçu pour solliciter l'unité de coupe (7) vers une position neutre par rapport à l'unité d'entraînement (3).

7. Tondeuse à gazon (1) selon la revendication 5 et 6, dans laquelle la position neutre constitue une position de l'unité de coupe (7) par rapport à l'unité d'entraînement (3) dans laquelle chaque partie venant en prise avec le sol (19) desdites roues motrices (5) et desdites roues de support (9) s'étend le long d'un plan plat (p2).

8. Tondeuse à gazon (1) selon la revendication 6 ou 7, dans laquelle l'ensemble suspension (13, 13') est conçu pour solliciter l'unité de coupe (7) vers la position neutre avec une amplitude qui augmente avec l'augmentation du décalage de l'unité de coupe (7) par rapport à la position neutre.

9. Tondeuse à gazon (1) selon l'une quelconque des revendications précédentes, dans laquelle la tondeuse à gazon (1) comprend un châssis d'unité d'entraînement (3') et un châssis d'unité de coupe (7'), et dans laquelle l'ensemble suspension (13, 13') est conçu pour limiter progressivement le mouvement entre le châssis d'unité de coupe (7') et le châssis d'unité d'entraînement (3').

10. Tondeuse à gazon (1) selon l'une quelconque des revendications précédentes, dans laquelle l'unité d'entraînement (3) comprend un ou plusieurs moteurs électriques (21) configurés pour faire tourner ladite ou lesdites roues motrices (5) afin de fournir une force motrice à la tondeuse à gazon (1).

11. Tondeuse à gazon (1) selon l'une quelconque des revendications précédentes, dans laquelle la tondeuse à gazon (1) comprend une unité de commande (23) configurée pour propulser la tondeuse à gazon (1) de manière autonome.
